(19) Europäisches Patentamt
European Patent Office
Office européen des brevets

(11) **EP 4 686 533 A1**

(12) **EUROPEAN PATENT APPLICATION**

(43) Date of publication:
04.02.2026 Bulletin 2026/06

(21) Application number: 24191565.1

(22) Date of filing: **29.07.2024**

(51) International Patent Classification (IPC):
**B25J 9/16** (2006.01)

(52) Cooperative Patent Classification (CPC):
**B25J 9/163;** B25J 9/1607; B25J 9/161

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Rozo, Leonel**
**71032 Boeblingen (DE)**
• **Beik-Mohammadi, Hadi**
**70190 Stuttgart (DE)**

Remarks:
Amended claims in accordance with Rule 137(2) EPC.

(54) **DEVICE AND METHOD FOR CONTROLLING A ROBOT DEVICE**

(57)   According to various embodiments, a method for controlling a robot device is provided, comprising providing demonstrations for movements for each of a plurality of different activities, learning the Jacobian of a function representing the demonstrated dynamics by training a neural network to output, in response to input of information about a state of the robot device and one or more parameter values specifying the activity, a representation of a semi-definite matrix, which, when regularized to give a definite matrix approximates the Jacobian of the function representing the demonstrated dynamics of the robot device when performing the activity and controlling the robot device by, for a given state and a given activity to be performed, using the neural network to approximate the Jacobian of the function representing the demonstrated dynamics at the given state when performing the activity, determining dynamics according to the approximated Jacobian and following the determined dynamics.

Fig. 1

**EP 4 686 533 A1**

**Description**

The present disclosure relates to devices and methods for controlling a robot device.

To ensure the safety of fully autonomous robots, stability guarantees are crucial in preventing undesirable and potentially harmful actions. Learning dynamic skills from demonstrations provides an efficient method to model highly dynamic motions from a few examples. However, stability guarantees are hard to provide in dynamical systems that are learned from demonstrations, especially when the learned dynamics are governed by neural networks. Therefore, effective approaches for learning dynamics in a way that stability is ensured are desirable. Moreover, it is desirable to be able to efficiently learn dynamics for different tasks and skills such that the robot is able to autonomously handle different control scenarios.

According to various embodiments, a method for controlling a robot device is provided, comprising

- providing demonstrations for movements of the robot device for each of a plurality of different activities, wherein for each of the activities, each demonstration demonstrates dynamics of the robot device when performing the activity;
- learning the Jacobian of a function representing the demonstrated dynamics for each of the activities by training a neural network to output, in response to input of information about a state of the robot device and one or more parameter values specifying the activity, a representation of a semi-definite matrix, which, when regularized to give a definite matrix approximates the Jacobian of the function representing the demonstrated dynamics of the robot device when performing the activity; and
- controlling the robot device by, for a given state and a given activity to be performed, using the neural network to approximate the Jacobian of the function representing the demonstrated dynamics at the given state when performing the activity, determining dynamics according to the approximated Jacobian and following the determined dynamics.

The method described above provides learning dynamics from demonstrations while ensures contractivity, eliminating the need for imposing hard or soft contraction constraints during model optimization. This guarantees stable and convergent dynamics without compromising training.

Moreover, the method described above allows modelling dynamics with an enhanced capability to adapt to dynamic environments, i.e. to handle difference control scenarios: by means of using one or more parameter values specifying a respective activity, the dynamics of multiple different activities (e.g. multiple skills) may be trained simultaneously (i.e. in the training of a single neural network) and, after training, the most appropriate stable motion in response to a given condition (specified by the one or more parameter values) is given by the neural network's output. This is particularly advantageous in scenarios where flexibility and adaptability are crucial. For instance, within an industrial context, a single neural network (plus, e.g., an autoencoder, see below) may be trained to model dynamics for grasping various objects from different positions.

The method described above may be implemented using one or more neural networks (e.g. one for learning dynamics and a variational autoencoder for encoding and decoding) to independently learn models of the unknown system dynamics. This flexibility allows for accurate representation and adaptation to complex dynamical systems.

In the following, various examples are given.

Example 1 is a method for controlling a robot device as described above.

Example 2 is the method of example 1, wherein (for each of the activities) determining the dynamics according to the approximated Jacobian comprises solving a line integral of the Jacobian to approximate the dynamics (e.g. in terms of a velocity) at the given state (e.g. according to equation (4), see below).

The dynamics can thus be efficiently represented by means of a Jacobian matrix.

Example 3 is the method of example 1 or 2, wherein (for each of the activities) the information about the state of the robot device is an encoding of the state of the robot device to a latent state in a latent space by the encoding network of a variational autoencoder and wherein controlling the robot device for the given state comprises encoding the given state to a latent state for the given state, approximating the Jacobian at the latent state for the given state by inputting the latent state for the given state and one or more parameter values specifying the given activity (according to the parameters that were used to specify the activities in the training of the neural network) into the neural network, approximating the demonstrated dynamics at the latent state for the given state and the given activity in the latent space according to the approximated Jacobian and approximating the demonstrated dynamics at the given state (in (actual) state space) by converting the approximated demonstrated dynamics at the latent state for the given state in the latent space to approximated demonstrated dynamics at the given state (in (actual) state space) by a conversion given by the Jacobian of the decoding network of the variational autoencoder (e.g. a conversion according to equation (11), see below).

In other words, the Jacobian of the function representing the demonstrated dynamics may operate in latent space. This allows handling a high-dimensional state space by means of a lower-dimensional latent space. So, according to various examples, scalability to high-dimensional systems is provided (while preserving contractivity) by using variational autoencoder (with an injective decoder). This approach enables the learning of system dynamics in a low-dimensional latent space while preserving contractivity. This allows overcoming the challenges associated with learning higher-dimensional dynamics.

Example 4 is the method of example 3, wherein the decoding network of the variational autoencoder implements a smooth injective mapping.

This ensures that contractivity is preserved.

Example 5 is the method of any one of examples 1 to 4, wherein the Jacobian of the function representing the demonstrated dynamics is the sum of the semi-definite matrix and a diagonal regularization matrix (i.e. the regularization matrix is done by adding a diagonal matrix) and the representation of the semi-definite matrix is the Cholesky decomposition of the semi-definite matrix.

This allows an efficient representation of the Jacobian of the function representing the demonstrated dynamics.

Example 6 is the method of any one of examples 1 to 5, comprising, determining the one or more parameter values from observations of an environment of the robot device.

This may be done in training (i.e. for determining the one or more parameter values for the demonstrations when using them for training the neural network, i.e. fitting the neural network to the demonstrated dynamics) as well as when controlling the robot device, e.g. by receiving an output of a perceptions system (such an object detector determining the location of an object or a target location from image data). The robot device may thus be enabled to handle a wide variety of control scenarios autonomously.

Example 7 is a controller, configured to perform a method of any one of examples 1 to 6.

Example 8 is a computer program comprising instructions which, when executed by a computer, makes the computer perform a method according to any one of examples 1 to 6.

Example 9 is a computer-readable medium comprising instructions which, when executed by a computer, makes the computer perform a method according to any one of examples 1 to 6.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1     shows a robot.

Figure 2     illustrates the vector field generated by a model trained under two distinct conditional settings: shape and target.

Figure 3     illustrates the generated latent vector fields for two distinct motion tasks.

Figure 4     shows a flow diagram illustrating a method for controlling a robot device.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

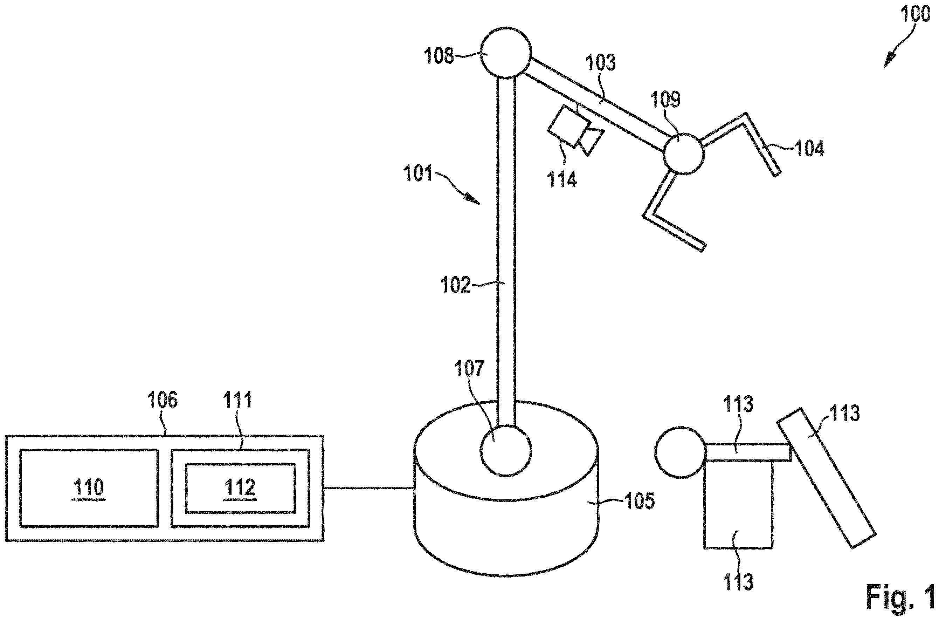

Figure 1 shows a robot 100.

The robot 100 includes a robot arm 101, for example an industrial robot arm for handling or assembling a work piece (or one or more other objects 113). The robot arm 101 includes manipulators 102, 103, 104 and a base (or support) 105 by which the manipulators 102, 103, 104 are supported. The term "manipulator" refers to the movable members of the robot arm 101, the actuation of which enables physical interaction with the environment, e.g. to carry out a task. For control, the robot 100 includes a (robot) controller 106 configured to implement the interaction with the environment according to a control program. The last member 104 (furthest from the support 105) of the manipulators 102, 103, 104 is also referred to as the end-effector 104 and includes a grasping tool (which may also be a suction gripper).

The other manipulators 102, 103 (closer to the support 105) may form a positioning device such that, together with the end-effector 104, the robot arm 101 with the end-effector 104 at its end is provided. The robot arm 101 is a mechanical arm that can provide similar functions as a human arm.

The robot arm 101 may include joint elements 107, 108, 109 interconnecting the manipulators 102, 103, 104 with each other and with the support 105. A joint element 107, 108, 109 may have one or more joints, each of which may provide rotatable motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator can implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 includes one or more processors 110 and a memory 111 storing code and data based on which the processor 110 controls the robot arm 101. According to various embodiments, the controller 106 controls the robot arm 101 on the basis of a machine-learning model (e.g. including one or more neural networks) 112 stored in the memory 111.

One option to control the robot arm 101 is that the controller 106 learns, by means of the machine-learning model 112, dynamics of the robot arm from demonstrations (typically from a human user) how to perform a certain task (like reaching for an object). This means that it is demonstrated to the controller 106 (e.g. by moving the robot arm manually by a human user) in what direction and with which speed the robot arm should move when being in a certain state (e.g. in particular end-effector position). When the controller 106 has learned these dynamics (e.g. the machine-learning model 112 is trained to output, for a state, a velocity vector), the controller 106 can simply operate as velocity controller and follow the dynamics to perform the task.

Learning robot dynamics from demonstrations has shown to be an efficient and intuitive approach for encoding highly dynamic motions into a robot's repertoire. Unfortunately, these learning-based approaches often struggle to ensure stability as they rely on the respective machine learning model to extrapolate in a controlled manner. Models based on neural networks, in particular, generally struggle with providing global stability guarantees.

Stability is commonly ensured through asymptotic or contraction guarantees. Asymptotic stability ensures that all motions converge to a fixed point (known as the system's attractor). This is suitable when the only requirement is that the robot eventually reaches a certain configuration, e.g. its end-effector is at a specific goal position. Many tasks, however, require the robot to dynamically follow desired trajectories, e.g. in flexible manufacturing, human-robot interaction, or in entertainment settings. In these cases, asymptotic stability is insufficient. A stronger notion of stability is provided by contraction theory, which ensures that all the path integrals regardless of their initial state incrementally converge over time. However, the mathematical requirements of a contractive system are difficult to ensure in popular neural network architectures.

Neural contractive dynamical systems (NCDS) provide an approach for incorporating contraction constraints directly into the architecture of neural networks. Although the NCDS approach has the ability to generate contractive vector fields for executing complex skills, it currently lacks the capacity to condition on varying variables, such as different task requirements or states (e.g. target states). Furthermore, other methods that leverage contraction-based stability are heavily reliant on optimization processes and lack flexibility when faced with different conditional values. Additionally, while flow-based methods offer a simpler stability approach through asymptotic stability, they also fall short in accommodating varying conditions, such as changes in equilibrium. In view of the above, according to various embodiments, a conditional NCDS ("Conditional-NCDS") approach is provided. This approach based on conditional NCDS (i.e. NCDS including a dependency on one or more conditional variables), enhances the capability of learning multimodal tasks, e.g. variable targets, using a single NCDS module, i.e. for example using a single neural network for learning robot device dynamics which, to take into account the one or more conditional variables, receives the one or more conditional variables as input in addition to information about the robot devices state (i.e. a state vector which is possibly a latent space state vector, see below).

In the following, more details about neural contractive dynamical systems (NCDS) and the NCDS approach are given and then next it is described how conditionality may be incorporated into NCDS to arrive at Conditional-NCDS.

For the following let $\dot{x} = f(x)$ be a dynamical system (e.g. describing the desired autonomous behaviour of a robot arm), where $x \in \mathbb{R}^D$ is the state variable and $f : \mathbb{R}^D \to \mathbb{R}^D$ is an, at least, $C^1$ function. Intuitively speaking, contraction stability ensures that the distance between any two neighbouring trajectories incrementally decrease over time regardless of initial conditions $x(0)$, $\dot{x}(0)$ and temporary perturbations. The system stability can, thus, be analyzed differentially, i.e. it can be determined whether two nearby trajectories both fulfilling $\dot{x} = f(x)$ converge to one another. Specifically, contraction theory defines a measure of distance between neighbouring trajectories, known as the contraction metric, which decreases exponentially over time.

Formally, an autonomous dynamical system yields the differential relation $\delta\dot{x} = J(x)\delta x$, where $J(x) = \partial f / \partial x$ is the system Jacobian and $\delta x$ is a virtual displacement (i.e., an infinitesimal spatial displacement between the nearby trajectories at a fixed time). The rate of change of the corresponding infinitesimal squared distance $\delta x^T \delta x$ is then

$$\frac{\mathrm{d}}{\mathrm{d}t}\left(\delta \boldsymbol{x}^\top \delta \boldsymbol{x}\right) = 2\delta \boldsymbol{x}^\top \delta \dot{\boldsymbol{x}} = 2\delta \boldsymbol{x}^\top \boldsymbol{J}(\boldsymbol{x})\delta \boldsymbol{x}. \qquad (1)$$

It follows that if the symmetric part of the Jacobian $\boldsymbol{J(x)}$ is negative definite, then the infinitesimal squared distance between neighbouring trajectories decreases over time. This can be formalized as the following definition of contraction stability: an autonomous dynamical system $\dot{x} = f(x)$ exhibits a contractive behaviour if its Jacobian $J(x) = \partial f/\partial x$ is uniformly negative definite, or equivalently if its symmetric part is negative definite. This means that there exists a constant $\tau > 0$ such that $\delta x^T \delta x$ converges to zero exponentially at rate 2T. This can be summarized as

$$\exists \tau > 0 \quad s.t. \quad \forall \boldsymbol{x}, \quad \frac{1}{2}\left(\boldsymbol{J}(\boldsymbol{x}) + \boldsymbol{J}(\boldsymbol{x})^\top\right) \prec -\tau \boldsymbol{I} \prec 0 \qquad (2)$$

The above analysis can be generalized to account for a more general notion of distance of the form $\delta \boldsymbol{x}^\top \boldsymbol{M(x)}\delta \boldsymbol{x}$, where $\boldsymbol{M(x)}$ is a positive-definite matrix known as the contraction metric. For our purposes, we define contraction guarantees following Eq. 2.

According to various embodiments, in view of equation (2), $f : \mathbb{R}^D \to \mathbb{R}^D$ is represented by a neural network (e.g. the machine learning model 112) in a manner that it is guaranteed that the symmetric part of the Jacobian is negative definite. It should be noted that it is not apparent how to impose a negative definiteness constraint on a network's Jacobian without compromising its expres-siveness. For this, the Jacobian of $f : \mathbb{R}^D \to \mathbb{R}^D$ is represented by a neural network (denoted as "Jacobian" neural network in the following), i.e. the Jacobian neural network gives a prediction $\hat{\boldsymbol{J}}_f$ in response to a state input. The Jacobian neural network, denoted as $\boldsymbol{J}_\theta$ is used to produce matrix-valued negative definite outputs. Specifically, the outputs are generated as

$$\hat{\boldsymbol{J}}_f(\boldsymbol{x}) = -\left(\boldsymbol{J}_{\boldsymbol{\theta}}(\boldsymbol{x})^\top \boldsymbol{J}_{\boldsymbol{\theta}}(\boldsymbol{x}) + \epsilon \mathbb{I}_D\right) \qquad (3)$$

where $\boldsymbol{J}_{\boldsymbol{\theta}} : \mathbb{R}^D \to \mathbb{R}^{D \times D}$ is a neural network parameterized by $\theta$, $\epsilon \in \mathbb{R}^+$ is a small positive constant, and $\mathbb{I}_D$ is an identity matrix of size $D$. Intuitively, this can be interpreted as $\boldsymbol{J}_\theta$ being (approximately) the square root of $\hat{\boldsymbol{J}}_f$. Clearly, $\hat{\boldsymbol{J}}_f$ is negative definite as its largest eigenvalue is bounded from above by $-\varepsilon$.

The parameter $\varepsilon$ is set to be a small constant (e.g. $10^{-4}$). It may be experimentally chosen. It has to be small in order to not interfere with the reconstruction since it does not only affect the non-negative eigenvalues but all of them, so larger values may negatively affect the reconstruction accuracy.

The function $f : \mathbb{R}^D \to \mathbb{R}^D$ can now be produced (or approximated) by integrating $\hat{\boldsymbol{J}}_f$ So, $f : \mathbb{R}^D \to \mathbb{R}^D$ has the Jacobian $\hat{\boldsymbol{J}}_f$ which is implicitly parametrized by $\theta$: by the fundamental theorem of calculus for line integrals the function can be constructed by a line integral of the form

$$\dot{\boldsymbol{x}} = f(\boldsymbol{x}) = \dot{\boldsymbol{x}}_0 + \int_0^1 \hat{\boldsymbol{J}}_f\left(c\left(\boldsymbol{x}, t, \boldsymbol{x}_0\right)\right) \dot{c}(\boldsymbol{x}, t, \boldsymbol{x}_0)\mathrm{d}t, \qquad (4)$$

with

$$c(\boldsymbol{x}, t, \boldsymbol{x}_0) = (1 - t)\boldsymbol{x}_0 + t\boldsymbol{x} \text{ and } \dot{c}(t, \boldsymbol{x}_0, \boldsymbol{x}) = \boldsymbol{x} - \boldsymbol{x}_0 \qquad (5)$$

where $x_0$ and $\dot{x}_0 = f(x_0)$ represent the initial conditions of the state variable and its first-order time derivative, respectively. The input point $\boldsymbol{x_0}$ can be chosen arbitrarily (e.g. as the mean of the training data or learned), while the corresponding function value $\dot{\boldsymbol{x}}_0$ has to be trained alongside the parameters $\theta$.

This means that given a set of demonstrations denoted as D = $\{x_i, \dot{x}_i\}$, a set of parameters $\theta$ along with the initial conditions $x_0$ and $\dot{x}_0$ are learned such that the integration in equation (4) enables accurate reconstruction of the velocities $\dot{\boldsymbol{x}}_i$ given the state $\boldsymbol{x_i}$.

The integral in equation (4) is similar to a neural ordinary differential equation, with the difference that it represents a second- order ordinary differential equation. Specifically, the outcome of this integral pertains to the velocity at state $\boldsymbol{X}$, rather than the ensuring state. It can thus be seen as a second-order neural ordinary equation and be solved using off-the-shelf numerical integrators. The resulting function $f$ has a uniformly negative definite Jacobian for any choice of $\theta$ and is consequently contractive by construction. This way of determining $f$ is denoted as neural contractive dynamical system (NCDS) approach. It is highly flexible even though it guarantees contractive stability. Further, it allows

- using any smooth neural network $\boldsymbol{J}_\theta$ as the base model, and
- being trained using ordinary unconstrained optimization (so the parameters $\theta$ along with the initial conditions $\boldsymbol{x_0}$ and $\dot{\boldsymbol{x}}_0$ may be trained by fitting the model to the demonstrations, e.g. by gradient descent of a certain loss).

In the above description of the neural contractive dynamical system, the neural network $\boldsymbol{J}_\theta$ operates on the state space $x \in \mathbb{R}^D$, which may have a high number of dimensions. However, learning highly nonlinear contractive dynamical systems in high-dimensional spaces is difficult. These systems may exhibit complex trajectories with intricate interactions and interdependencies among the system variables, making it challenging to capture their underlying dynamics.

To address this, data dimensionality may be reduced by working on a low-dimensional latent space, i.e. $\boldsymbol{J}_\theta$ then has elements from the latent space (i.e. "latent vectors" or "latent codes") as inputs. The main difficulty for this approach is that even if the latent dynamics are contractive, the associated high-dimensional dynamics are not necessarily contractive. In view of this, in the following, an approach for reducing data dimensionality (for the NCDS approach) is described which allows preserving contraction.

According to various embodiments, a variational autoencoder (VAE) is used. A VAE is a deep generative model. The main goal of deep generative models is to approximate a true underlying probability density P(x) given a finite set of training data in an ambient space X by considering a lower-dimensional latent space Z. In particular, the variational autoencoder (VAE) is a latent variable model, often specified through a prior and a likelihood,

$$p(\boldsymbol{z}) = \mathcal{N}\left(\boldsymbol{z} \mid \boldsymbol{0},\, \mathbb{I}_d\right) \qquad \boldsymbol{z} \in \mathcal{Z} \qquad (6)$$

$$p_\phi(\boldsymbol{x}|\boldsymbol{z}) = \mathcal{N}\left(\boldsymbol{x} \mid \mu_\phi(\boldsymbol{z}),\, \mathbb{I}_D \sigma_\phi^2(\boldsymbol{z})\right), \qquad \boldsymbol{x} \in \mathcal{X} \qquad (7)$$

Typically, the mean and the variance of the likelihood are parametrized using deep neural networks $\mu_\phi : Z \rightarrow X$ and $\sigma_\phi^2 : \mathcal{Z} \rightarrow \mathbb{R}_+^D$ with parameters $\phi$, and $\mathbb{I}_D$ and $\mathbb{I}_d$ being identity matrices of size $D$ and d, respectively. The corresponding density can be evaluated by the associated marginal likelihood (evidence) $p_\phi(x) = \int_{\mathcal{Z}} p_\phi(x|z)p(z)dz$, but this is generally intractable. Instead, a variational lower bound is maximized during model fitting

$$\mathcal{L}_{ELBO} = \mathbb{E}_{q_\xi(\boldsymbol{z}|\boldsymbol{x})}\left[\log(p_\phi(\boldsymbol{x}|\boldsymbol{z}))\right] - \mathrm{KL}\left(q_\xi(\boldsymbol{z}|\boldsymbol{x})\|p(\boldsymbol{z})\right) \qquad (8)$$

by leveraging a variational distribution $q_\xi(\boldsymbol{z}|\boldsymbol{x}) = \mathcal{N}(\boldsymbol{z} \mid \mu_\xi(\boldsymbol{x}), \mathbb{I}_d \sigma_\xi^2(\boldsymbol{x}))$ that approximates the true posterior distribution p(z|x), where $\mu_\xi : X \rightarrow Z$ and $\sigma_\xi : \mathcal{X} \rightarrow \mathbb{R}_+^d$ are deep neural networks with parameters $\xi$. The approximate posterior distribution $p_\xi(z|x)$ is called inference or encoder distribution, while the generative distribution $p_\phi(x|z)$ is called the generator or decoder. The latent variable z = $\mu_\xi(x)$ is often interpreted as the low-dimensional representation of an observation $\boldsymbol{x}$.

According to various embodiments, a VAE is used to provide low-dimensional representations of individual points along observed trajectories in order to learn a latent contractive dynamical system.

A key limitation of the VAE is that it does not allow to evaluate the marginal likelihood so one needs to rely on a bound. When $\dim(\mathcal{X})=\dim(\mathcal{Z})$, the change-of-variables theorem can be applied to evaluate the marginal likelihood exactly, giving rise to the model class known as normalizing flows. This requires the deterministic decoder to be a diffeomorphism, i.e. a smooth invertible function with a smooth inverse. In order to extend this to the case where $\dim(\mathcal{X})$ > $\dim(\mathcal{Z})$, according to various embodiments, an injective flow is used which implements a zero-padding operation on the latent variables alongside a diffeomorphic decoder, such that the resulting function is injective.

So, according to various embodiments, to reduce data dimensionality with a VAE while preserving contractivity of the contractive dynamical system when it is decoded into the data space, the fact that contraction is invariant under coordinate changes is used. This means that the transformation between the latent and data spaces may be generally achieved through a diffeomorphic mapping: given an autonomous contractive dynamical system $x = f(x)$ and a diffeomorphism $\psi$ applied on the state $x \in \mathbb{R}^D$, the transformed system preserves contraction under the change of coordinates $y$ = 1jJ (x). Equivalently, contraction is also guaranteed under a differential coordinate change

$$\delta_y = \frac{\partial \psi}{\partial x}\delta_x.$$

Accordingly, according to various embodiments, a VAE with a diffeomorphic decoder $\mu : \mathcal{Z} \rightarrow \mathcal{X}$, i.e. a smooth bijective mapping between two smooth manifolds which preserves the topological properties of $\mathcal{Z}$, and whose inverse $\mu^{-1}$ is also smooth is trained.

Formally, an injective flow $\mu$ : z, -+ X learns an injective mapping between a low-dimensional latent space $\mathcal{Z}$ and a higher-dimensional data space X. Injectivity of the flow ensures that there are no singular points or self-intersections in the flow, which may compromise the stability of the system dynamics in the data space. In order to train $\mu$ an injective flow decoder is used which implements a zero-padding operation on the latent variables followed by a series of K invertible transformations $g_k$. This means that

$$\mu = g_K \circ \cdots \circ g_1 \circ \mathrm{Pad}, \qquad\qquad (9)$$

where Pad(z) = $[z_1 \cdots z_d\ 0 \cdots 0]^T$ represents a d-dimensional vector z with additional D-d zeros. This decoder is a diffeomorphic mapping between $\mathcal{Z}$ and $\mu(\mathcal{Z})$ ⊂ $\mathcal{X}$, such that a decoded contractive dynamical system remains contractive.

Specifically, a latent data representation using a VAE is learned, where the decoder mean $\mu_\xi$ follows the architecture of equation (9). Experiments show that training stabilizes when the variational encoder takes the form

$$q_\xi(z|x) = \mathcal{N}(z \mid \tilde{\mu}_\xi^{-1}(x), \mathbb{I}_d \sigma_\xi^2(x))$$, where $\tilde{\mu}_\xi^{-1}$ is the approximate inverse of $\mu_\xi$ given by

$$\tilde{\mu}_\phi^{-1} = \mathrm{Unpad} \circ g_1^{-1} \circ \cdots \circ g_K^{-1}, \qquad\qquad (10)$$

where Unpad : $\mathbb{R}^D \rightarrow \mathbb{R}^d$ removes the last D-d dimensions of its input as an approximation to the inverse of the zero-padding operation. It should be noted that an exact inverse is not required for equation (8) to be a lower bound on the model evidence.

It should further be noted that the state X solely encodes the positional information of the system, disregarding the velocity $\dot{x}$. In order to decode latent velocity $\dot{z}$ into data space velocity $\dot{x}$, we the Jacobian matrix associated with the decoder mean function, denoted as $J_{\mu_\xi}(z)$, can be used.

This matrix encapsulates the partial derivatives of the decoder's output with respect to its inputs, thus enabling the decoding process according to

$$\dot{x} = J_{\mu_{\xi}}(z)\dot{z} \tag{11}$$

This allows learning a contractive dynamical system on the latent space $\mathcal{Z}$, where the contraction is guaranteed by employing the NCDS as described above (i.e. in particular equation (3)). The latent velocities $\dot{z}$ (which may in training be simply estimated by numerical differentiation with respect to the latent state Z) given by such a contractive dynamical system can be mapped to the data space X using equation (11). The resulting dynamical system still guarantees contraction since, as explained above, diffeomorphisms preserve contractivity.

When state encoding using a VAE is used, the training comprises two stages: first, the VAE is trained using evidence lower bound (ELBO) loss. ELBO is combined of two terms, a reconstruction that maximizes the log likelihood therefore ensuring proper reconstructing of the input, and a regularization term that ensures that the latent codes are normally distributed. Once the VAE is trained access to the latent space is available and the model modelling the dynamical system, i.e. the Jacobian network, can be trained. The model modelling the dynamical system may be trained end-to-end by providing latent state and velocities of the demonstration as the training data. The loss contains a reconstruction term that computes the difference between actual and approximated velocity in the latent space. This difference is then used as a loss and backpropagated thorough the integration and the Jacobian network. If state encoding using the VAE is not used, the first stage is omitted.

So, as described above, a machine learning model (e.g. a neural network) according to an NCDS can be trained to represent robot dynamics in a low dimensional latent space of a Variational Autoencoder (VAE) with the latent dynamics remaining contractive after decoding into the data space. For this, the fact that contraction is invariant under coordinate changes is leveraged. This means that the transformation between the latent and data spaces may be generally achieved through a diffeomorphic mapping. Therefore, according to various embodiments, the training includes training a VAE with an injective decoder $\mu$ which is a diffeomorphism between the latent space $\mathcal{Z}$ and its image $\mu(\mathcal{Z}) \subset \mathcal{X}$. Geometrically, $\mu$ spans a d-dimensional submanifold of $\mathcal{X}$ on which the dynamical system (whose dynamics are learned) operates.

In the following, the Conditional-NCDS approach is described which allows including one or more conditional input variables into the dynamics that are learned. A conditional variable can for example be used account for changes in the environment of the robot device that should be controlled, such as shifts in the target state of the robot device, and allows expanding the NCDS approach to integrate with perception systems. For example, a perception system may determine information about where an object to be grabbed is located or where the target location for an object is. This information may then be used as input for the dynamics model, i.e. the neural network $Je$, for example by specifying coordinates of an object to be grabbed or a target location.

The one or more conditional variables may not only specify different tasks for the same skill (i.e. putting an object to different locations) but also different skills. For example, a conditional variable might specify whether an object is to be grabbed or rotated. The conditional input variables (e.g. given in form of a condition vector) can thus be seen as one or more parameter values specifying the activity that the robot device has carried out (in a demonstration for training) or should carry out (when controlling), wherein different activities may be different tasks but also different skills.

For the Conditional-NCDS approach, a condition vector c is introduced in the formulation given above. This variable (which may be a vector, i.e. may include multiple scalar condition variables) is concatenated to the state vector x and enforces the model trained to model the dynamics to produce a velocity at the given state which satisfies the required conditions (as specified by the conditional variables). Using the above terms, this may be expressed by reformulating equation (3) as follows

$$\hat{J}_f([x, c]) = -(J_{\theta}([x, c])^{\top} J_{\theta}([x, c]) + \epsilon \mathbb{I}_D) \tag{12}$$

It should be noted that it is not necessary to modify the architecture of the VAE. As above, a VAE may be used to serve as a mechanism to obtain low-dimensional latent representations of data, without concern for their conditional values. Specifically, according to various embodiments, the conditional values of latent codes (i.e. latent vectors, i.e. elements of the latent space) are managed independently. These values are then provided to the model within the latent space.

Algorithm 1 gives details of the training procedure of the Conditional-NCDS approach according to an example.

---

**Algorithm 1:** Conditional Neural Contractive Dynamical Systems: Training in task space

---

**Data:** Demonstrations: $\tau_n = \{(\boldsymbol{x}_t, \boldsymbol{R}_t)\}_n, n \in [1, N], t \in [1, T_n]$

**Result:** Learned contractive dynamical system

$\boldsymbol{r}_{n,t} = \text{Log}(\boldsymbol{R}_{n,t})$; // Obtaining skew-symmetric coefficients via the Lie algebra

$\boldsymbol{p}_{n,t} = [\boldsymbol{x}_{n,t}, \boldsymbol{r}_{n,t}]$; // Create new state vector

$\text{argmin}_{\boldsymbol{\xi}} \mathcal{L}_{\text{ELBO}}(\boldsymbol{\xi}^*; \boldsymbol{p}_{n,t})$; // Train the VAE

$\boldsymbol{z}_{n,t} = \mu_{\boldsymbol{\xi}}^{-1}(\boldsymbol{p}_{n,t})$; // Encode all poses using the trained VAE

$\dot{\boldsymbol{z}}_{n,t} = \frac{\boldsymbol{z}_{n,t+1} - \boldsymbol{z}_{n,t}}{\Delta t}$; // Estimate latent velocities via finite differences

$\boldsymbol{z}_{n,t} = [\boldsymbol{z}_{n,t}, \boldsymbol{c}]$; // Concatenate the latent codes with their conditional value

$\text{argmin}_{\boldsymbol{\theta}} \mathcal{L}_{\text{Jac}}(\boldsymbol{\theta}^*; \boldsymbol{z}_{n,t})$; // Train the Jacobian network

---

Algorithm 2 is an example of a robot control scheme of the Conditional-NCDS approach according to an example.

---

**Algorithm 2:** Conditional Neural Contractive Dynamical Systems (NCDS): Robot Control Scheme

---

**Data:** Current state of the robot end-effector at time $t$: $[\boldsymbol{x}_t, \boldsymbol{R}_t]$

**Result:** Velocity of the end-effector at current time step $\dot{\boldsymbol{x}}_t$

$\boldsymbol{r}_t = \text{Log}(\boldsymbol{R}_t)$; // Obtaining skew-symmetric coefficients

$\boldsymbol{p}_t = [\boldsymbol{x}_t, \boldsymbol{r}_t]$; // Create new state vector

$\boldsymbol{z}_t = \mu_{\boldsymbol{\xi}}^{-1}(\boldsymbol{p}_t)$; // Compute the latent state

$\boldsymbol{z}_t = [\boldsymbol{z}_t, \boldsymbol{c}]$; // Concatenate the latent code with the desired conditional value

$\dot{\boldsymbol{z}}_t = f(\boldsymbol{z}_t)$; // Compute the latent velocity

$\boldsymbol{J}_{\mu_{\boldsymbol{\xi}}}(\boldsymbol{z}_t) = \frac{\partial \mu_{\boldsymbol{\xi}}}{\partial \boldsymbol{z}_t}$; // Compute the Jacobian of the decoder

$\dot{\boldsymbol{x}}_t = \boldsymbol{J}_{\mu_{\boldsymbol{\xi}}}(\boldsymbol{z}_t)\dot{\boldsymbol{z}}_t$; // Compute input space velocity

---

It should be noted that in algorithms 1 and 2, the robot state (denoted by x above) has two components: the position (denoted by x) and a rotation (e.g. end-effector rotation) r. Together, these form the pose p. So, p is the state vector in this example and corresponds to x in the above formulas.

It should further be noted that in the third line of both algorithm 1 and algorithm 2 the rotation is determined. For this, the rotation matrix R is mapped to the tangent space (so-called Lie algebra) of the Lie group of end-effector orientations to form a skew-symmetric matrix with three degrees of freedom. The matrix is then decomposed to a three-dimensional vector r represented in the Euclidean space.

Except for the usage of the conditional value, the Conditional-NCDS approach corresponds to what is described above for the NCDS approach. The main difference lies in that the neural network $J_\theta$ which, by means of equation (3) and (12), respectively, specifies the dynamics that are learned, i.e. models the dynamics, gets not only the state vector (latent state in these examples) as input but, in addition, the condition vector c, i.e. one or more parameter values specifying the activity for which (in training) a demonstration was shown or (when controlling) which the robot device should carry out.

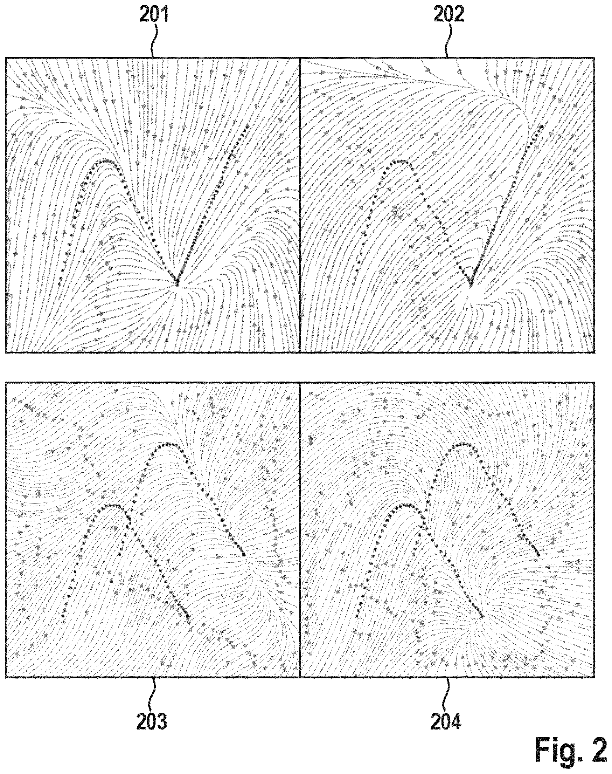

Figure 2 illustrates the vector field generated by a model (i.e. neural network $J_\theta$) trained under two distinct conditional settings: shape and target. Panels 201 and 202 focus on the vector fields conditioned by the trajectory shape. Panel 201 shows the vector field when the conditional value leads the NCDS model to reconstruct motion characterized by the angle motion, whereas panel 202 displays the vector field for the line motion, triggered by an alternate conditional value. In this context, the conditional values selected are 0.0 for angle motion and 1.0 for line motion. Furthermore, panels 203 and 204 of figure 2 focus on the vector fields conditioned by the trajectory target (which is different for the two panels 203, 204). Here, the condition variable $c = [x^*, y^*]$ is defined as the coordinates of the target. It can be seen that conditionality is effectively incorporated into x, allowing a single trained NCDS model (i.e. a single neural network $J_\theta$) to generate motions of different shapes based on varying conditional inputs.

As mentioned, the Conditional-NCDS approach can in particular be effectively applied in scenarios involving multiple skills for executing a complex task.

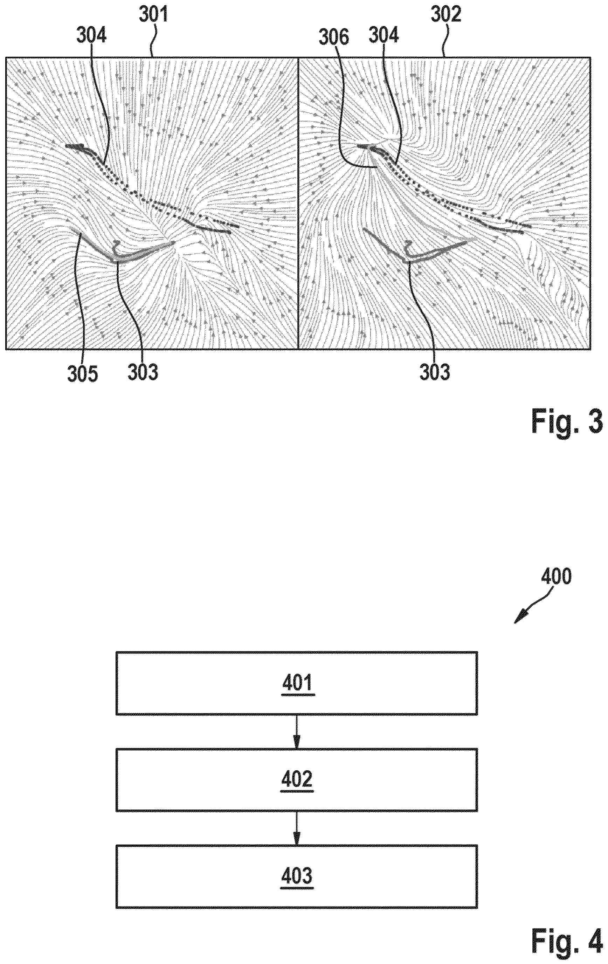

Figure 3 illustrates the generated latent vector fields for two distinct motion tasks learned using a single model trained according to the Conditional-NCDS approach. The left panel 301 shows the latent vector field derived from a grasping skill, with a robot's action of grasping a plate from a table represented by first dots 303 (in both panels 301, 302). The right panel 302 depicts another skill, where the task involves dropping a dish into a dishwasher rack, indicated by second dots 304 (in both panels 301, 302). The background stream plots in both panels demonstrate the learned

contractive vector fields. The curves 305, 306 represent the path integrals produced by the model when given a specific conditional value.

**[0073]** In summary, according to various embodiments, a method for controlling a robot device is described as illustrated in figure 4.

**[0074]** Figure 4 shows a flow diagram 400 illustrating a method for controlling a robot device according to an embodiment.

**[0075]** In 401, demonstrations for movements of the robot device are provided for each of a plurality of different activities, wherein for each of the activities, each demonstration demonstrates dynamics of the robot device when performing the activity.

**[0076]** The difference activities may be different tasks (i.e. the same skill, like grabbing but for example taking a different object or putting it somewhere else) and/or may include tasks of different skills (like grabbing instead of putting)).

**[0077]** In 402, the Jacobian of a function representing the demonstrated dynamics is learned for each of the activities by training a neural network (also referred to as "Jacobian network" $\boldsymbol{J}_\theta$) to output, in response to input of information about a state of the robot device and one or more parameter values specifying the activity (also referred to as conditional variables in the examples above), a representation of a semi-definite matrix, which, when regularized to give a definite matrix approximates the Jacobian of the function representing the demonstrated dynamics of the robot device (101) when performing the activity.

**[0078]** In 403, the robot device is controlled by, for a given state and a given activity to be performed, using the neural network to approximate the Jacobian of the function representing the demonstrated dynamics at the given state when performing the activity, determining dynamics according to the approximated Jacobian and following the determined dynamics.

**[0079]** The approach of figure 4 can be used to learn a control policy (from demonstrations) and then compute a control signal for controlling a technical system, like e.g. a computer-controlled machine, like a robot, a vehicle, a domestic appliance, a power tool, a manufacturing machine, a personal assistant or an access control system. According to various embodiments, a policy for controlling the technical system may be learnt and then the technical system may be operated accordingly.

**[0080]** Various embodiments may receive and use image data (i.e. digital images) from various visual sensors (cameras) such as video, radar, LiDAR, ultrasonic, thermal imaging, motion, sonar etc., e.g. to determine the one or more parameter values specifying the activity.

**[0081]** The method of Figure 4 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

**[0082]** Accordingly, according to one embodiment, the method is computer-implemented.

## Claims

**1.** A method for controlling a robot device (101), comprising:

providing (401) demonstrations for movements of the robot device (101) for each of a plurality of different activities, wherein for each of the activities,
each demonstration demonstrates dynamics of the robot device (101) when performing the activity;
learning (402) the Jacobian of a function representing the demonstrated dynamics for each of the activities by training a neural network to output, in response to input of information about a state of the robot device (101) and one or more parameter values specifying the activity, a representation of a semi-definite matrix, which, when regularized to give a definite matrix approximates the Jacobian of the function representing the demonstrated dynamics of the robot device (101) when performing the activity; and
controlling (403) the robot device (101) by, for a given state and a given activity to be performed, using the neural network to approximate the Jacobian of the function representing the demonstrated dynamics at the given state when performing the activity, determining dynamics according to the approximated Jacobian and following the determined dynamics.

**2.** The method of claim 1, wherein determining the dynamics according to the approximated Jacobian comprises solving a line integral of the Jacobian to approximate the dynamics at the given state.

**3.** The method of claim 1 or 2, wherein the information about the state of the robot device (101) is an encoding of the state of the robot device (101) to a latent state by the encoding network of a variational autoencoder and wherein controlling the robot device (101) for the given state comprises encoding the given state to a latent state for the given state, approximating the Jacobian at the latent state for the given state by inputting the latent state for the given state and one or more parameter values specifying the given activity into the neural network, approximating the demonstrated dynamics at the latent state for the given state in the latent space according to the approximated Jacobian and approximating the demonstrated dynamics at the given state for the given activity by converting the approximated demonstrated dynamics at the latent state for the given state in the latent space to approximated demonstrated dynamics at the given state by a conversion given by the Jacobian of the decoding network of the variational autoencoder.

**4.** The method of claim 3, wherein the decoding network of the variational autoencoder implements a smooth injective mapping.

**5.** The method of any one of claims 1 to 4, wherein the Jacobian of the function representing the demonstrated dynamics is the sum of the semi-definite matrix and a diagonal regularization matrix and the representation of the semi-definite matrix is the Cholesky decomposition of the semi-definite matrix.

**6.** The method of any one of claims 1 to 5, comprising, determining the one or more parameter values from observations of an environment of the robot device (101).

**7.** A controller (106), configured to perform a method of any one of claims 1 to 6.

**8.** A computer program comprising instructions which, when executed by a computer, makes the computer perform a method according to any one of claims 1 to 6.

**9.** A computer-readable medium comprising instructions which, when executed by a computer, makes the computer perform a method according to any one of claims 1 to 6.

**Amended claims in accordance with Rule 137(2) EPC.**

**1.** A method for controlling a robot device (101), comprising:

providing (401) demonstrations for movements of the robot device (101) for each of a plurality of different activities, wherein for each of the activities, each demonstration demonstrates dynamics of the robot device (101) when performing the activity;
learning (402) the Jacobian of a function representing the demonstrated dynamics for each of the activities by training a neural network to output, in response to input of information about a state of the robot device (101) and one or more parameter values specifying the activity, a representation of a semi-definite matrix, which, when regularized to give a definite matrix approximates the Jacobian of the function representing the demonstrated dynamics of the robot device (101) when performing the activity; and
controlling (403) the robot device (101) by, for a given state and a given activity to be performed, using the neural network to approximate the Jacobian of the function representing the demonstrated dynamics at the given state when performing the activity, determining dynamics according to the approximated Jacobian and following the determined dynamics,
wherein the Jacobian of the function representing the demonstrated dynamics is the sum of the semi-definite matrix and a diagonal regularization matrix and the representation of the semi-definite matrix is the Cholesky decomposition of the semi-definite matrix.

**2.** The method of claim 1, wherein determining the dynamics according to the approximated Jacobian comprises solving a line integral of the Jacobian to approximate the dynamics at the given state.

**3.** The method of claim 1 or 2, wherein the information about the state of the robot device (101) is an encoding of the state of the robot device (101) to a latent state by the encoding network of a variational autoencoder and wherein controlling the robot device (101) for the given state comprises encoding the given state to a latent state for the given state, approximating the Jacobian at the latent state for the given state by inputting the latent state for the given state and one or more parameter values specifying the given activity into the neural network, approximating the demonstrated dynamics at the latent state for the given state in the latent space according to the approximated Jacobian and approximating the demonstrated dynamics at the given state for the given activity by converting the approximated demonstrated dynamics at the latent state for the given state in the latent space to approximated demonstrated dynamics at the given state by a conversion given by the Jacobian of the decoding network of the variational autoencoder.

4. The method of claim 3, wherein the decoding network of the variational autoencoder implements a smooth injective mapping.

5. The method of any one of claims 1 to 4, comprising, determining the one or more parameter values from observations of an environment of the robot device (101).

6. A controller (106), configured to perform a method of any one of claims 1 to 5.

7. A computer program comprising instructions which, when executed by a computer, makes the computer perform a method according to any one of claims 1 to 5.

8. A computer-readable medium comprising instructions which, when executed by a computer, makes the computer perform a method according to any one of claims 1 to 5.

EP 4 686 533 A1

Fig. 1

201 202

203 204

Fig. 2

301 302
304 306 304

305 303 303

Fig. 3

400

401

402

403

Fig. 4

**EP 4 686 533 A1**

## EUROPEAN SEARCH REPORT

Application Number

EP 24 19 1565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Beik-Mohammadi Hadi ET AL: "NEURAL CONTRACTIVE DYNAMICAL SYSTEMS", , 17 January 2024 (2024-01-17), XP093237953, Retrieved from the Internet: URL:https://arxiv.org/abs/2401.09352 | 1-4,6-9 | INV. B25J9/16 |
| Y | * Section 2 * * Section 3 * * Section 4 * * Section A.3 * * Section A.4 * * Section A.5 * ----- | 5 | |
| Y | JINGYUE LIU ET AL: "Physics-informed Neural Networks to Model and Control Robots: a Theoretical and Experimental Investigation", ARXIV.ORG, CORNELL UNIVERSITY LIBRARY, 201 OLIN LIBRARY CORNELL UNIVERSITY ITHACA, NY 14853, 4 July 2023 (2023-07-04), XP091554498, * Section 3.1 * * Section 3.2 * * Section 3.3 * ----- | 5 | TECHNICAL FIELDS SEARCHED (IPC) B25J |

The present search report has been drawn up for all claims

| Place of search | Date of completion of the search | Examiner |
|---|---|---|
| The Hague | 13 January 2025 | Lefeure, Guillaume |

EPO FORM 1503 03.82 (P04C01)